# EUROPEAN PATENT SPECIFICATION

(11) **EP 4 632 472 B1**
(45) Date of publication and mention of the grant of the patent: **02.09.2026**
(21) Application number: 24382356.4
(22) Date of filing: 08.04.2024
(51) Int. Cl.: G02F 1/1334

(54) **METHOD AND APPARATUS FOR MANUFACTURING AN ELEMENT MADE OF SMART PDLC FILM**
VERFAHREN UND VORRICHTUNG ZUR HERSTELLUNG EINES ELEMENTS AUS INTELLIGENTEM PDLC-FILM
PROCÉDÉ ET APPAREIL DE FABRICATION D'UN ÉLÉMENT CONSTITUÉ D'UN FILM PDLC INTELLIGENT

(43) Date of publication of application: 15.10.2025
(73) Proprietor: Dream Glass S. L., 28860 Paracuellos De Jarama (Madrid) (ES)
(72) Inventor: MESHKAT MAMALEK, Mojtaba, 28860 Paracuellos del Jarama (Madrid) (ES); VILLAR MENÉNDEZ, José Manuel, 28860 Paracuellos del Jarama (Madrid) (ES); PLAIA, Nicolo, 28860 Paracuellos del Jarama (Madrid) (ES)
(74) Representative: TRBL Intellectual Property

(56) References cited:
- WO-A1-2020/255094
- WO-A2-2014/134714
- US-A1- 2024 027 864

## Description

### FIELD OF THE INVENTION

The present invention lies within the technical field of smart films. More specifically, the invention relates to a shutter and a method and apparatus for manufacturing thereof.

### BACKGROUND OF THE INVENTION

There is a big demand in some industrial sectors, such an automotive one, to provide panoramic sunroofs with smart glass, especially with a Polymer Dispersed Liquid Crystal (PDLC) layer. In some cases, a high demand needs to be met, so an automatic assembly line to produce these parts would be required. Since the product is a new one and comprises many particular features, existing assembly lines cannot be used to process PDLC sheets ready for lamination.

In particular, the type of shutters that are involved in the present invention are those which comprise a first conductive layer (such as an Indium Tin Oxide material deposited on a thin sheet of Polyethylene Terephthalate, called ITO PET), a second conductive layer (e.g., a second ITO PET) and a cured PDLC material encapsulated between the two ITO PETs. The first ITO PET is divided into segments by etching, while the second ITO PET is a common electrode. The manufacturing method of the present invention is based on a continuous roll of this smart film (PDLC material between two ITO PETs).

The automated method sought by the present invention is not a mere automation of existing crafting methods. The power of machinery introduces their own capacities but also their own drawbacks that need to be solved. The management of the PDLC film is very delicate and the etching and installation of the electronic elements should be done with care and a good design. Further, the process should be fast enough to meet the needs of the industry. There is a further requirement related to the forming of the part, since if the forming is not properly done, the PDLC film becomes wrinkled during lamination.

Relevant background art useful for understanding the invention, according to Rule 42(1)(b) EPC include: US2024/027864, WO2020/255094 and WO2014/134714.

### BRIEF DESCRIPTION OF THE INVENTION

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

A first object of the present invention relates to a method for manufacturing an element, the method comprising unwinding a smart film arrangement from a first roller over a working surface, the smart film arrangement comprising a first conductive layer, a second conductive layer and a layer of a cured PDLC material between the first and second conductive layers, so that a working portion of the smart film arrangement undergoes the following steps in this order:
a. performing a plurality of etching lines in the first conductive layer by at least one etching head;
b. applying a first infrared radiation source on a first zone of the working portion, so that the PDLC material of the first zone is degraded, wherein the first zone is delimited by a first perimeter;
c. a first cutting head perform a kiss-cut in the first perimeter of the first zone and a first roller removes the first conductive layer and the PDLC material of the first zone;
d. a first conductive paste element is deposited on the first zone and dried;
e. a first busbar is installed on a portion of the first conductive paste element wherein a first portion of the first busbar is installed on a first portion of the second conductive layer and a second portion of the first busbar is installed on a second portion of the second conductive layer;
f. a sealing paste is applied on the first zone of the working portion, also covering an excess margin from the first zone and then is dried by applying UV energy;
g. a direction assembly changes the orientation of the smart film arrangement upside down;
h. applying a second infrared radiation source on a second zone of the working portion, so that the PDLC material of the second zone is degraded, wherein the second zone is delimited by a second perimeter and wherein the second zone comprises the second portion of the second conductive layer;
i. a second cutting head perform a kiss-cut in the perimeter of the second zone and a second roller removes the second conductive layer and the PDLC material of the second zone, thus removing at least the second portion of the second conductive layer, leaving the second portion of the first busbar visible from the face of the second conductive layer;
j. a plurality of second conductive paste elements are deposited on the second zone and dried;
k. a second busbar is installed on each second conductive paste element;
l. the working portion is cut and thermoformed;
m. a flexible printed circuit is applied on the second zone, in contact with the second portion of the first busbar and in contact with the plurality of second busbars; and
n. a sealing paste is applied on the second zone of the working portion, also covering an excess margin from the second zone and then is dried by applying UV energy.

Step a. of the method requires a smart film arrangement to be unwound over the working surface. The method is performed sequentially on different working portions of this smart film arrangement, since the assembly line comprises different stages, where the same operation is performed over subsequent working portions of the smart film arrangement. The method is defined by the subsequent operations that are performed on the same working portion, but the rest of the working portions are suffering the same steps in delayed time: where a first working portion is undergoing step c., the next working portion is undergoing step b., and so on.

The first step a. involves the performance of etching lines in the first conductive layer of the working portion. This is done by at least one etching head, which may be, in some cases, a laser etching head. One etching head is enough to perform these etching lines but, in some cases, more than one etching head may be used to speed up the process. These etching lines divide the working portion in regions, that will become segments of a shutter at the end of the process.

Next step b. involves the application of an infrared radiation source on a first zone of the working portion. This aims to affect the PDLC material which is contained in this first zone, which is delimited by a perimeter. The IR radiation does not affect to the conductive layers, but only to the PDLC material.

Next step c. involves the removal of some material in the working portion: a cutting head perform a kiss-cut in the perimeter of the first zone and a roller removes the first conductive layer and the PDLC material of the first zone. Since the PDLC material was degraded by the application of infrared radiation, it adheres to the first conductive layer, and is removed from the working portion when the first zone of the first conductive layer is cut and removed. Hence, this leaves a zone of the working portion (the first zone) when the second conductive layer is the only material, since the first conductive layer and the PDLC material have been removed.

Next step d. involves the deposition of a first conductive paste element on the first zone. Since the first zone only comprises the second conductive layer, the first conductive paste element is directly deposited on the second conductive layer. Afterwards, the first conductive paste element is dried.

Next step e. involves the installation of a first busbar on the working portion, and more particularly on a portion of the first conductive paste element. This first busbar has a first portion which is installed on a portion of the first conductive paste element which is deposited on a first portion of the second conductive layer. The first busbar also has a second portion which is installed on a portion of the first conductive paste element which is deposited on a second portion of the second conductive layer. This second portion of the first busbar is the portion that will be seen from the opposite side of the smart film arrangement when, as will be explained in step i. below, the second portion of the second conductive layer is removed. This concept will be explained later in more detail.

The busbar can be a busbar assembly which comprises a plastic substrate where the busbar itself is installed. This plastic substrate is used to provide mechanical support to the busbar and also to provide a thickness to the busbar assembly.

Next step f. involves the application of a sealing paste on the first zone of the working portion and also covering an excess margin from the first zone. This step aims to seal the edge of the future part to prevent any foreign element from contacting the PDLC material. Hence, a sealing paste is applied on the first zone and also on the excess margin. Then, the sealing paste is cured by applying UV energy.

Next step g. involves the change in the orientation of the smart film arrangement. As stated above, the method is carried out on a continuous roll of a smart film arrangement. In steps a. to f., this roll was oriented with the first conductive layer facing upwards and the second conductive layer facing downwards, lying on the working surface. This step g. causes a change in the orientation upside down, so that the second conductive layer becomes the layer which is upwards and the first conductive layer becomes the layer which is downwards.

Steps h. to k. are similar to the corresponding steps b. to e., but they are applied on the second conductive layer, which is the one which is now faced upwards. The second conductive layer is not etched, since it will be used as a common electrode. The shape of the second zone is different from the shape of the first zone, since the aim of each zone is different. The shape of the first busbar and the shape of the plurality of second busbars is also different.

It is to be noted that the second zone comprises the second portion of the second conductive layer, so that, when this second zone is removed after the kiss-cut process, the second portion of this second conductive layer is also removed, thus leaving the second portion of the first busbar visible from the face of the second conductive layer.

Due to this method, a complete part may be manufactured in an assembly line in a short period of time and in a reliable manner. The change in the direction of the roll is advantageous, since it allows working on both sides of the smart film arrangement and also reduces the length necessary to use this method. Further, the fact that the first busbar has a second portion which is seen from the opposite side of the smart film arrangement (hence causing all the busbars being seen from the same side of the smart film arrangement) allows the installation of the flexible printed circuit from one side, feeding all the electrode layers.

In some particular embodiments, between steps a. and b., the method comprises the step of marking the smart film arrangement. In some particular embodiments, the step of marking the smart film arrangement is performed by applying a IR machine and cutting a portion of the smart film arrangement.

Marking the smart film arrangement is a good solution for an automatic advance apparatus to carry out the advance steps in an accurate and reliable manner. A small cut in the smart film arrangement may be easily detected by sensors arranged in the apparatus which may act on the roller to advance the material according to the needs of the method.

In some particular embodiments, steps a. to f. are performed in a first floor and steps h. to n. are performed on a ground floor different from the first floor, so that step g. is performed by changing the advance direction of the smart film arrangement by the direction assembly.

This feature is twofold: on one side, it reduces the size of the apparatus needed to perform the method. On the other side, it allows working on both sides of the smart film arrangement easily.

In some particular embodiments, the conductive paste comprises silver paste. This is a compound which is especially suitable for this invention, since it provides a good conductivity and is easily deposited on the corresponding conductive layer.

In some particular embodiments, the first zone covers three sides of the working portion and the second zone covers the side of the working portion which is not covered by the first zone.

It is advantageous that the whole perimeter of the final part is sealed, to avoid the contamination of the PDLC material in subsequent operations, e.g., when polyvinyl butyral (PVB) is applied on the final part to laminate the part with the automotive glass.

In a second inventive aspect, the invention provides an apparatus suitable for performing the steps of a method according to the first inventive aspect, the apparatus comprising:
a first roller;
a working surface arranged to receive the material unwind by the first roller;
a conveyor roller suitable for causing an advance movement in the material unwind by the first roller;
a etching head arranged to perform an etching pattern in the material unwind by the first roller;
a first infrared radiation source arranged downstream the laser etching head and configured to apply infrared radiation on the material unwind by the first roller;
a first cutting head arranged downstream the first infrared radiation source and configured to perform a kiss-cut in the material unwind by the first roller;
a first removing roller arranged downstream the first cutting head and configured to remove a scrap portion of the material unwind by the first roller;
a first conductive paste dispenser arranged downstream the first removing roller and configured to deposit some conductive paste element on the material unwind by the first roller;
a first working arm arranged downstream the first conductive paste dispenser and configured to place a first busbar on the material unwind by the first roller;
a first polymer dispenser arranged downstream the working arm and configured to deposit a polymeric substance on the material unwind by the first roller;
a direction assembly arranged downstream the first polymer dispenser and configured to change the orientation of the material unwind by the first roller upside down;
a second infrared radiation source arranged downstream the direction assembly and configured to apply infrared radiation on the material unwind by the first roller;
a second cutting head arranged downstream the second infrared radiation source and configured to perform a kiss-cut in the material unwind by the first roller;
a second removing roller arranged downstream the second cutting head and configured to remove a scrap portion of the material unwind by the first roller;
a second conductive paste dispenser arranged downstream the second removing roller and configured to deposit a plurality of conductive paste elements on the material unwind by the first roller;
a second working arm arranged downstream the second conductive paste dispenser and configured to place a plurality of second busbars on the material unwind by the first roller;
a thermoforming device arranged downstream the second working arm; and
a device for applying a flexible printed circuit arranged downstream the thermoforming device.

The apparatus also comprises a first laser head configured to cut a plurality of marks to help the automatic advance of the material in stop-start operation. The marks intended to be detected by sensors at each stage of operation.

In some particular embodiments, the direction assembly comprises a first direction roller configured to change the direction of the material unwind by the first roller in 90° clockwise and a second direction roller configured to change the direction of the material unwind by the first roller in 90° clockwise, so that the material unwind by the first roller enters the direction assembly in a first direction and exits the direction assembly in a second direction opposite to the first direction.

In some particular embodiments, the first cutting head and/or the second cutting head comprises a plotter blade cutting head or a laser cutting head. These plotter blade cutting head or laser cutting head are suitable tools to perform the kiss-cut operations, and can be easily adjusted to cut only the first conductive layer of the smart film arrangement without causing any damage in the rest of the film arrangement.

In some particular embodiments, the etching head is a laser etching head.

### DESCRIPTION OF THE FIGURES

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows an apparatus for performing a method for manufacturing an element according to the invention.
Figure 2 shows a further step of a particular embodiment of a method according to the present invention wherein, after exiting the laser etching head, the working portion reaches the first IR source.
Figure 3 shows a further step of a particular embodiment of a method according to the present invention wherein, after exiting the first removing roller, the working portion reaches the first silver paste dispenser.
Figure 4 shows a further step of a particular embodiment of a method according to the present invention wherein, after exiting the first silver paste dispenser, the working portion receives a first busbar in the zone where the silver paste was deposited.
Figure 5 shows a further step of a particular embodiment of a method according to the present invention wherein, after installing the first busbar, the working portion arrives at a first polymer dispenser.
Figure 6 shows a further step of a particular embodiment of a method according to the present invention wherein, after receiving the polymeric substance, the working portion crosses a direction assembly.
Figure 7 shows a further step of a particular embodiment of a method according to the present invention wherein, after exiting the direction assembly, the working portion reaches the second IR source.
Figure 8 shows a further step of a particular embodiment of a method according to the present invention wherein, after exiting the second removing roller, the working portion reaches the second silver paste dispenser.

In these figures, the following reference numbers have been used:
- 1: First roller
- 2: Working surface
- 3: Conveyor roller
- 4: Etching head
- 5: First IR source
- 6: First cutting head
- 7: First removing roller
- 8: First silver paste dispenser
- 9: First working arm
- 10: Smart film arrangement
- 11: First polymeric dispenser
- 12: First direction roller
- 13: Second direction roller
- 14: Second IR source
- 15: Second cutting head
- 16: Second removing roller
- 17: Second silver paste dispenser
- 18: Second working arm
- 19: Thermoforming device
- 20: Device for applying a flexible printed circuit
- 21: First zone
- 22: First perimeter
- 23: Etching lines
- 24: Silver paste band
- 25: First busbar
- 26: Polymeric substance
- 31: Second zone
- 32: Second perimeter
- 33: Cut line
- 34: Intersection zone
- 35: Second busbars
- 36: Second silver paste elements

### DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

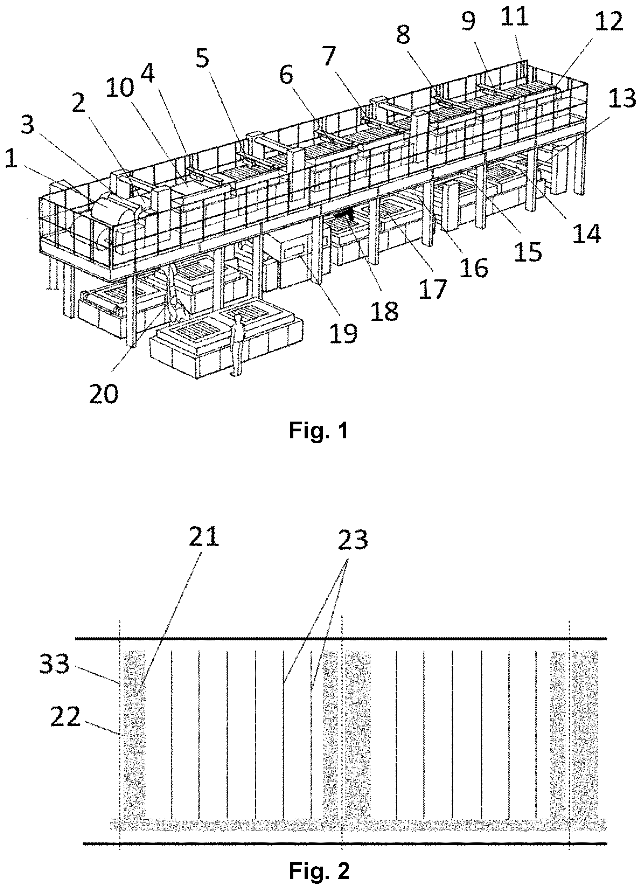

Figure 1 shows an apparatus for performing a method for manufacturing an element according to the invention.

This apparatus comprises the following elements:
a first roller 1, which is configured to unroll a roll of a smart film arrangement 10, which comprises a first conductive layer, a second conductive layer and a layer of a cured PDLC material between the first and second conductive layers;
a working surface 2 arranged to receive the material unwind by the first roller 1;
a conveyor roller 3 suitable for causing an advance movement in the smart film arrangement 10;
a laser etching head 4 arranged to perform an etching pattern in the smart film arrangement 10;
a first infrared radiation source 5 arranged downstream the laser etching head 4 and configured to apply infrared radiation on the smart film arrangement 10;
a first cutting head 6 arranged downstream the first infrared radiation source 5 and configured to perform a kiss-cut in the smart film arrangement 10;
a first removing roller 7 arranged downstream the first cutting head 6 and configured to remove a scrap portion of the smart film arrangement 10;
a first silver paste dispenser 8 arranged downstream the first removing roller 7 and configured to deposit some silver paste on the smart film arrangement 10;
a first working arm 9 arranged downstream the first silver paste dispenser 8 and configured to place a first busbar on the smart film arrangement 10;
a first polymer dispenser 11 arranged downstream the working arm 9 and configured to deposit a polymeric substance on the smart film arrangement 10;
a direction assembly arranged downstream the first polymer dispenser and configured to change the orientation of the smart film arrangement 10 upside down, this direction assembly comprising a first direction roller 12 and a second direction roller 13;
a second infrared radiation source 14 arranged downstream the direction assembly and configured to apply infrared radiation on the smart film arrangement 10;
a second cutting head 15 arranged downstream the second infrared radiation source 14 and configured to perform a kiss-cut in the smart film arrangement 10;
a second removing roller 16 arranged downstream the second cutting head 15 and configured to remove a scrap portion of the smart film arrangement 10;
a second silver paste dispenser 17 arranged downstream the second removing roller 16 and configured to deposit a plurality of silver paste elements on the smart film arrangement 10;
a second working arm 18 arranged downstream the second silver paste dispenser 17 and configured to place a plurality of second busbars on the smart film arrangement 10;
a thermoforming device 19 arranged downstream the second working arm 18; and
a device 20 for applying a flexible printed circuit arranged downstream the thermoforming device 19.

This apparatus is used under the steps of a method according to the invention.

A roll of smart film 10 is wound on the first roller 1. The method comprises unwinding the smart film 10 from the first roller 1 over a working surface 2, due to the action of the conveyer roller 3. The smart film 10 comprises a first electrode layer, a second electrode layer and a layer of a cured Polymer-Dispersed Liquid Crystal (PDLC) material between the first and second electrode layers.

The roll of smart film 10 is unwound and IR marked. This mark is a small incision in the smart film 10 to ease the positioning of the film in subsequent steps. Thanks to the mark, the machine will be able to move the smart film 10 to the exact position that each step needs. The roll will work be treated in working portions, each working portion undergoing the following steps subsequently.

When the working portion reaches the laser etching head 4, the first layer of the corresponding working portion is etched, by making several operations of this laser etching head 4 on the first electrode layer. In the present figure, one laser etching head 4 is represented, but in different embodiments of the invention, there may be multiple laser etching heads. These operations are directed to divide the first electrode layer of the corresponding working portion in segments, that will be used in the final operation of the shutter.

Figure 2 shows a further step of a particular embodiment of a method according to the present invention. After exiting the laser etching head, the working portion reaches the first IR source: in this step, IR radiation is applied on a specific region of the film (a region that will be removed afterwards to install the busbar), called first zone 21. This does not affect the first electrode layer, but degrades the PDLC material which is encapsulated in this first zone 21, delimited by a first perimeter 22.

This first perimeter 22 is independent from the segments delimited by the etching lines 23, which were marked on the smart film 10 in previous steps. This first perimeter 22 delimits the first zone 21. This first zone may be only a transversal region for some final products or, as in the image, composed of two transversal region and one longitudinal region.

When the working portion reaches the first cutting head, the first perimeter 22 is marked by the kiss-cut head, so that the first electrode layer of this first zone 21 can be removed by a first removing roller. The first transversal portion and the longitudinal portion are rolled up by the first removing roller, which is motorized and moves in START-STOP operation in synchronization with the assembly line. When these portions are removed, a cutting device acts in the junction between the transversal and the longitudinal portions to cut the transversal zone of the first electrode layer and move it in other direction to put it in a dustbin. Since the PDLC material of this first zone 21 was previously degraded by the IR source, the PDLC material is adhered to the first electrode layer and removed together with the portion of this first electrode layer delimited by the kiss-cut, so that, in the first zone 21, the only material that remains is the second electrode layer.

This figure also shows the future cut lines 33, where the roll of smart film 10 will be divided into separate parts.

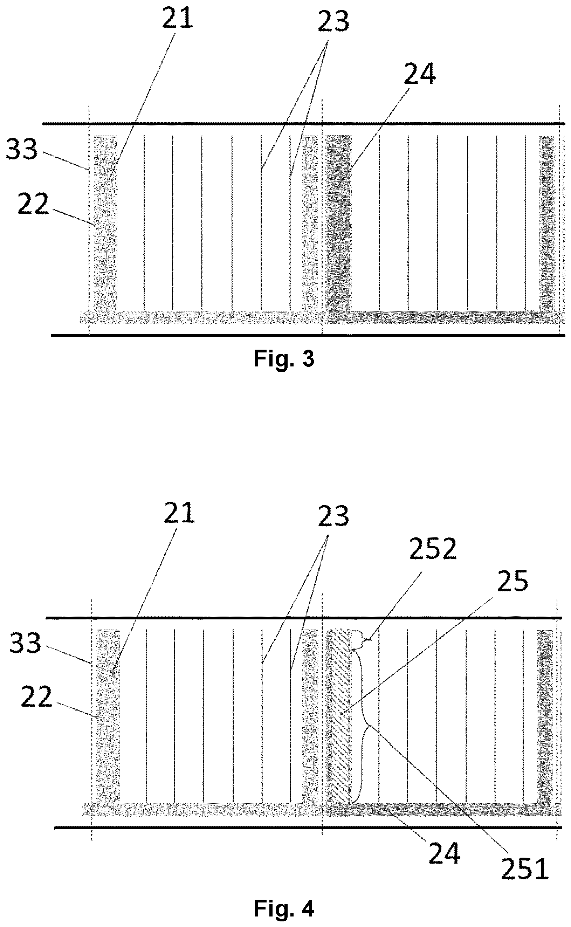

Figure 3 shows a further step of a particular embodiment of a method according to the present invention. After exiting the first removing roller, the working portion reaches the first silver paste dispenser. In this step, the first silver paste dispenser deposits a silver paste band 24 in the first zone 21 of the working portion. As explained above, this silver paste is deposited on the "back" face of the second electrode layer, which is the face of the second electrode layer which is mostly in contact with the PDLC material. Since the PDLC material was removed with the first electrode layer, this "back" face of the second electrode layer is seen, and the silver paste is deposited on this "back" face.

Figure 4 shows a further step of a particular embodiment of a method according to the present invention. After exiting the first silver paste dispenser, the working portion receives a first busbar 25 in the zone where the silver paste 24 was deposited. This first busbar 25 comprises a first portion 251 and a second portion 252. In this particular embodiment, the first portion is deposited on a portion of the silver paste 24 in such a way that the first portion 251 is installed on the silver paste which is deposited on a first portion of the second conductive layer and the second portion 252 is installed on the silver paste which is deposited on a second portion of the second conductive layer,. This second portion of the second electrode layer where the second portion 252 of the first busbar 25 is laid on will be removed in future steps, thus leaving this second portion 252 of the first busbar 25 accessible from the other side of the smart film arrangement 10.

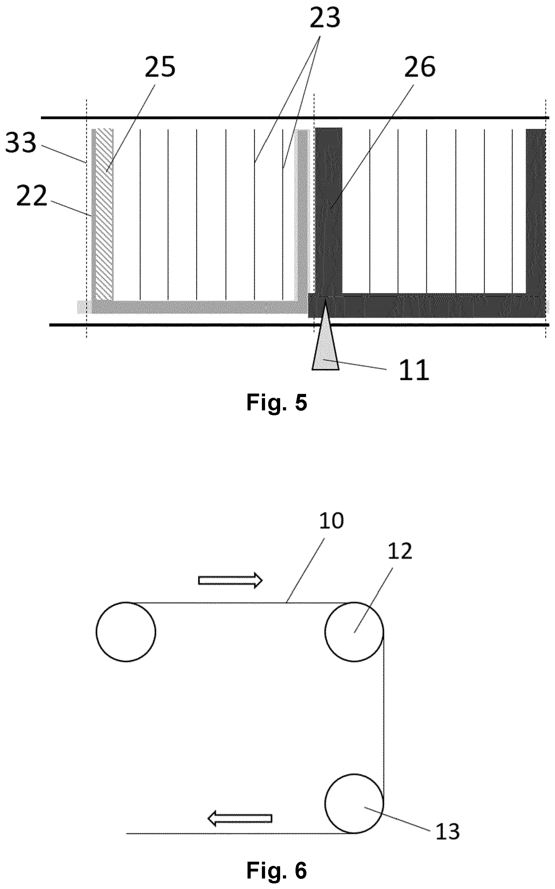

Figure 5 shows a further step of a particular embodiment of a method according to the present invention. After installing the first busbar 25, the working portion arrives at a first polymer dispenser 11. This polymer dispenser 11 applies a polymeric substance 26, which is an UV curable polymer, in a zone which corresponds to the first zone, but leaving a margin of about 2-3 mm in each side. This means that the surface covered by the polymeric substance 26 is wider and longer than the corresponding first zone. This can be seen in this figure, where one of the working portions is receiving the polymeric substance 26, and the zone is wider and longer than the corresponding zone, seen in the other working portion which has not received the polymeric substance yet. The aim of this polymeric substance 26 is protecting the PDLC material from the aggression of other substances, such as the ones used in further steps of the manufacturing of the automotive glass.

The automatic head of the polymer dispenser 11 applies the UV curable polymer 26, wherein the thickness of the curable polymer is comprised between 50 and 100 µm, thus leaving it ready to be cured by the radiation source.

Figure 6 shows a further step of a particular embodiment of a method according to the present invention. After receiving the polymeric substance, the working portion crosses a direction assembly. This direction assembly comprises a first direction roller 12, which deviates the roll 90° clockwise (downwards) and a second direction roller 13, which deviates the roll 90° clockwise again (backwards), so that the roll, after passing through these two direction rollers, now advances in a direction which is opposite from the direction where it travelled in the previous steps. In the following figures, the second electrode layer is seen as the upper layer, while the first electrode layer, which is etched and had been the upper layer in the previous steps, is now faced downwards, laid on the working surface. As a consequence of this change in the direction, the smart film 10 now travels in a floor which is under the first floor, where previous steps took place.

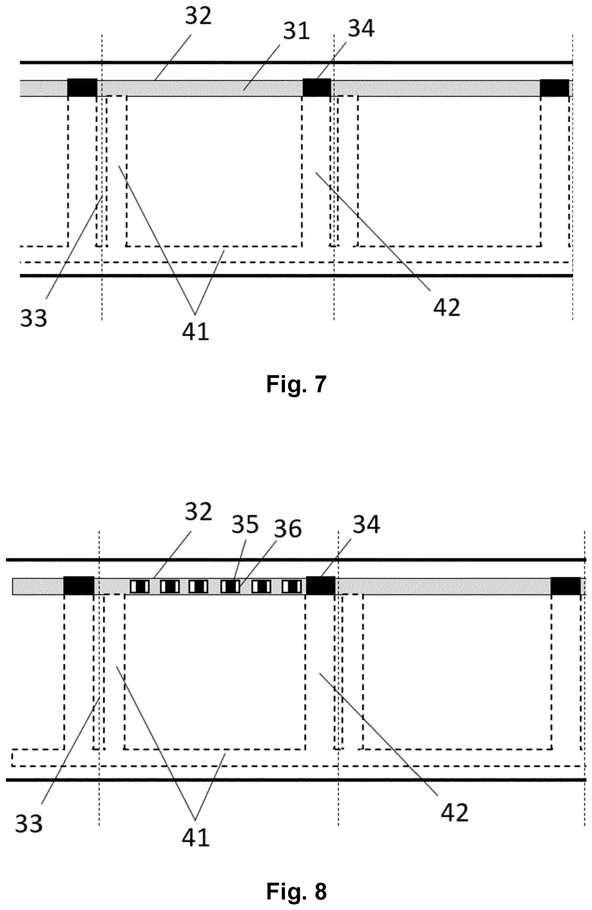

Figure 7 represents a step which is analogous to the one shown in Figure 2 but, in this case, the IR radiation is applied over a second zone 31 (delimited by a second perimeter 32) which is located, in this case, on the second electrode layer, which is the layer which is faced upwards in these steps. This second electrode layer has not suffered a previous etching step, since this second electrode layer is going to be used as a common electrode. As in the steps described in Figure 2, the PDLC material which is encapsulated in the second zone 31 is degraded, to be removed afterwards.

In this Figure 7, the first zone is shown dashed, but this first zone comprises two different portions: a first portion 41 represents a zone where only the second electrode layer is present (the first electrode layer with the PDLC material were removed in the steps shown in Figure 2) and a second portion 42 represents a zone where the second electrode layer is present with the silver paste and the first busbar installed on it. The busbar reaches the intersection zone 34 (which will be explained below).

When the working portion reaches the second cutting head, the second perimeter 32 is marked by the kiss-cut head, so that the second electrode layer of this second zone 31 can be removed by a second removing roller. Since the PDLC material of this second zone 31 was previously degraded by the second IR source, the PDLC material is adhered to the second electrode layer and removed together with the portion of this second electrode layer delimited by the kiss-cut. There is a special feature concerning this second zone 31, and is the fact that this second zone 31 comprises an intersection zone 34 where the only material present was the second electrode layer with the first busbar (this is due to the fact that the intersection zone 34 corresponds to a zone where the first electrode layer was removed, as seen in Figure 2). As a consequence, when the second electrode layer is removed from this second zone 31, the intersection zone 34 becomes a portion which is void from electrode layers, since both the first and the second electrode layer have been removed. This void created in the intersection zone 34 allows the second portion of the first busbar being seen by both sides, so that it is accessible from the side of the second electrode layer, which is the face seen in this Figure 7.

Figure 8 represents a step which is analogous to the one shown in Figure 3 but, in this case, the second silver paste dispenser deposits a plurality of silver paste elements 36. These silver paste elements 36 are deposited on the back face of the first electrode layer, which is the face of the first electrode layer which is in contact with the PDLC material. Since the PDLC material of the second zone 31 was removed with the second electrode layer, this "back" face of the first electrode layer is seen, and the silver paste elements 36 are deposited on this "back" face. After this, a plurality of second busbars 35, one per silver paste element 36, are deposited on the working portion.

After these steps, the working portion is subject to a thermoforming process, where the shape of the working portion is transformed into the final shape required by the client. This can be, for example, a part for a panoramic roof of an automotive vehicle.

After this step, a flexible printed circuit is installed in contact with the second portion of the first busbar and in contact with the plurality of second busbars. As has been explained previously, both the second portion of the first busbar and the second busbars are seen by the same face, which is the face of the second electrode layer.

After this installation, the product can be finished by applying the polymeric substance on the remaining edge, followed by a UV curing process. After that, the product can be conveniently packed and served.

## Claims

1. Method for manufacturing an element, the method comprising unwinding a smart film arrangement (10) from a first roller over a working surface (2), the smart film arrangement (10) comprising a first conductive layer, a second conductive layer and a layer of a cured polymer dispersed liquid crystal material between the first and second conductive layers, so that a working portion of the smart film arrangement (10) undergoes the following steps in this order:
a. performing a plurality of etching lines (23) in the first conductive layer by at least one etching head (4);
b. applying a first infrared radiation source (5) on a first zone of the working portion, so that the PDLC material of the first zone is degraded, wherein the first zone (21) is delimited by a first perimeter (22);
c. a first cutting head (6) perform a kiss-cut in the first perimeter of the first zone and a first roller (7) removes the first conductive layer and the PDLC material of the first zone;
d. a first conductive paste element (24) is deposited on the first zone (21) and dried;
e. a first busbar (25) is installed on a portion of the first conductive paste element (24), wherein a first portion (251) of the first busbar (25) is installed on a first portion of the second conductive layer and a second portion (252) of the first busbar (25) is installed on a second portion of the second conductive layer;
f. a sealing paste (26) is applied on the first zone of the working portion, also covering an excess margin from the first zone and then is dried by applying UV energy;
g. a direction assembly changes the orientation of the smart film arrangement upside down;
h. applying a second infrared radiation source on a second zone of the working portion, so that the PDLC material of the second zone is degraded, wherein the second zone is delimited by a second perimeter and wherein the second zone comprises the second portion of the second conductive layer;
i. a second cutting head (15) perform a kiss-cut in the perimeter of the second zone and a second roller removes the second conductive layer and the PDLC material of the second zone, thus removing at least the second portion of the second conductive layer, leaving the second portion of the first busbar visible from the face of the second conductive layer;
j. a plurality of second conductive paste elements are deposited on the second zone and dried;
k. a second busbar is installed on each second conductive paste element;
l. the working portion is cut and thermoformed;
m. a flexible printed circuit is applied on the second zone, in contact with the second portion of the first busbar and in contact with the plurality of second busbars; and
n. a sealing paste is applied on the second zone of the working portion, also covering an excess margin from the second zone and then is dried by applying UV energy.

2. Method according to claim 1, wherein between steps a. and b., the method comprises the step of marking the smart film arrangement.

3. Method according to claim 2, wherein the step of marking the smart film arrangement is performed by applying a IR machine and cutting a portion of the smart film arrangement.

4. Method according to any of the preceding claims, wherein the conductive paste elements comprise silver paste.

5. Method according to any of the preceding claims, wherein steps a. to f. are performed in a first floor and steps h. to n. are performed on a second floor different from the first floor, so that step g. is performed by changing the advance direction of the smart film arrangement by the direction assembly.

6. Method according to any of the preceding claims, wherein the first zone covers three sides of the working portion and the second zone covers the side of the working portion which is not covered by the first zone.

7. Apparatus suitable for performing the steps of a method according to any of the preceding claims, the apparatus comprising:
a first roller (1);
a working surface (2) arranged to receive the material unwind by the first roller (1);
a conveyor roller (3) suitable for causing an advance movement in the material unwind by the first roller (1);
a etching head arranged to perform an etching pattern in the material unwind by the first roller;
a first infrared radiation source arranged downstream the laser etching head and configured to apply infrared radiation on the material unwind by the first roller;
a first cutting head (4) arranged downstream the first infrared radiation source and configured to perform a kiss-cut in the material unwind by the first roller (1);
a first removing roller (5) arranged downstream the first cutting head (4) and configured to remove a scrap portion of the material unwind by the first roller (1);
a first conductive paste dispenser (6) arranged downstream the first removing roller and configured to deposit some conductive paste elements on the material unwind by the first roller (1);
a first working arm arranged downstream the first conductive paste dispenser and configured to place a first busbar on the material unwind by the first roller (1);
a first polymer dispenser arranged downstream the working arm and configured to deposit a polymeric substance on the material unwind by the first roller (1);
a direction assembly arranged downstream the first polymer dispenser and configured to change the orientation of the material unwind by the first roller (1) upside down;
a second infrared radiation source arranged downstream the direction assembly and configured to apply infrared radiation on the material unwind by the first roller;
a second cutting head (4) arranged downstream the second infrared radiation source and configured to perform a kiss-cut in the material unwind by the first roller (1);
a second removing roller (5) arranged downstream the second cutting head (4) and configured to remove a scrap portion of the material unwind by the first roller (1);
a second conductive paste dispenser (6) arranged downstream the second removing roller and configured to deposit a plurality of conductive paste elements on the material unwind by the first roller (1);
a second working arm arranged downstream the second conductive paste dispenser and configured to place a plurality of second busbars on the material unwind by the first roller (1);
a thermoforming device arranged downstream the second working arm; and
a device for applying a flexible printed circuit arranged downstream the thermoforming device.

8. Apparatus according to claim 7, wherein the direction assembly comprises a first direction roller configured to change the direction of the material unwind by the first roller (1) in 90° clockwise and a second direction roller configured to change the direction of the material unwind by the first roller (1) in 90° clockwise, so that the material unwind by the first roller enters the direction assembly in a first direction and exits the direction assembly in a second direction opposite to the first direction.

9. Apparatus according to any of claims 7 or 8, wherein the first cutting head and/or the second cutting head comprises a plotter blade cutting head or a laser cutting head.

10. Method or apparatus, according to any of the preceding claims, wherein the etching head is a laser etching head.

## Patentansprüche

1. Verfahren zur Herstellung eines Elements, wobei das Verfahren das Abwickeln einer Smart-Film-Anordnung (10) von einer ersten Walze über eine Arbeitsfläche (2) umfasst, wobei die Smart-Film-Anordnung (10) eine erste leitfähige Schicht, eine zweite leitfähige Schicht sowie eine Schicht aus einem ausgehärteten, polymerdispergierten Flüssigkristallmaterial zwischen der ersten und der zweiten leitfähigen Schicht umfasst, sodass ein Arbeitsabschnitt der Smart-Film-Anordnung (10) die nachstehenden Schritte in der angegebenen Reihenfolge durchläuft:
a. Erzeugen einer Vielzahl von Ätzlinien (23) in der ersten leitfähigen Schicht durch mindestens einen Ätzkopf (4);
b. Bestrahlen eines ersten Bereichs des Arbeitsabschnitts mit einer ersten Infrarotstrahlungsquelle (5), sodass das PDLC-Material des ersten Bereichs abgebaut wird, wobei der erste Bereich (21) durch einen ersten Umfangsrand (22) begrenzt ist;
c. Ausführen eines Kiss-Cuts entlang des ersten Umfangsrands des ersten Bereichs durch einen ersten Schneidkopf (6) und Entfernen der ersten leitfähigen Schicht sowie des PDLC-Materials des ersten Bereichs durch eine erste Walze (7);
d. Aufbringen eines ersten leitfähigen Pastenelements (24) auf den ersten Bereich (21) und Trocknen desselben;
e. Anbringen einer ersten Stromschiene (25) an einem Abschnitt des ersten leitfähigen Pastenelements (24), wobei ein erster Abschnitt (251) der ersten Stromschiene (25) an einem ersten Abschnitt der zweiten leitfähigen Schicht und ein zweiter Abschnitt (252) der ersten Stromschiene (25) an einem zweiten Abschnitt der zweiten leitfähigen Schicht angebracht wird;
f. Auftragen einer Dichtpaste (26) auf den ersten Bereich des Arbeitsabschnitts, wobei auch ein überstehender Randbereich des ersten Bereichs bedeckt wird, und anschließendes Trocknen durch Einwirkung von UV-Energie;
g. Ändern der Orientierung der Smart-Film-Anordnung durch eine Umlenkeinheit, wobei die Smart-Film-Anordnung umgedreht wird;
h. Bestrahlen eines zweiten Bereichs des Arbeitsabschnitts mit einer zweiten Infrarotstrahlungsquelle, sodass das PDLC-Material des zweiten Bereichs abgebaut wird, wobei der zweite Bereich durch einen zweiten Umfangsrand begrenzt ist und wobei der zweite Bereich den zweiten Abschnitt der zweiten leitfähigen Schicht umfasst;
i. Ausführen eines Kiss-Cuts entlang des Umfangsrands des zweiten Bereichs durch einen zweiten Schneidkopf (15) und Entfernen der zweiten leitfähigen Schicht sowie des PDLC-Materials des zweiten Bereichs durch eine zweite Walze, wodurch mindestens der zweite Abschnitt der zweiten leitfähigen Schicht entfernt wird, sodass der zweite Abschnitt der ersten Stromschiene von der Seite der zweiten leitfähigen Schicht aus sichtbar zurückbleibt;
j. Aufbringen einer Vielzahl von zweiten leitfähigen Pastenelementen auf den zweiten Bereich und Trocknen derselben;
k. Anbringen einer zweiten Stromschiene an jedem der zweiten leitfähigen Pastenelemente;
l. Zuschneiden und Thermoformen des Arbeitsabschnitts;
m. Aufbringen einer flexiblen Leiterplatte auf den zweiten Bereich, wobei diese mit dem zweiten Abschnitt der ersten Stromschiene und mit der Vielzahl von zweiten Stromschienen in Kontakt ist; und
n. Auftragen einer Dichtpaste auf den zweiten Bereich des Arbeitsabschnitts, wobei auch ein überstehender Randbereich des zweiten Bereichs bedeckt wird, und anschließendes Trocknen durch Einwirkung von UV-Energie.

2. Verfahren nach Anspruch 1, wobei das Verfahren zwischen den Schritten a. und b. den Schritt des Markierens der Smart-Film-Anordnung umfasst.

3. Verfahren nach Anspruch 2, wobei der Schritt des Markierens der Smart-Film-Anordnung durch den Einsatz eines IR-Geräts und durch Einschneiden eines Abschnitts der Smart-Film-Anordnung erfolgt.

4. Verfahren nach einem der vorstehenden Ansprüche, wobei die leitfähigen Pastenelemente Silberpaste umfassen.

5. Verfahren nach einem der vorstehenden Ansprüche, wobei die Schritte a. bis f. auf einer ersten Ebene und die Schritte h. bis n. auf einer zweiten, von der ersten Ebene verschiedenen Ebene durchgeführt werden, sodass Schritt g. durch Ändern der Vorschubrichtung der Smart-Film-Anordnung mittels der Umlenkeinheit durchgeführt wird.

6. Verfahren nach einem der vorstehenden Ansprüche, wobei der erste Bereich drei Seiten des Arbeitsabschnitts abdeckt und der zweite Bereich die nicht vom ersten Bereich abgedeckte Seite des Arbeitsabschnitts abdeckt.

7. Vorrichtung zur Durchführung der Schritte eines Verfahrens nach einem der vorstehenden Ansprüche, wobei die Vorrichtung Folgendes umfasst:
eine erste Walze (1);
eine Arbeitsfläche (2), die zur Aufnahme des von der ersten Walze (1) abgewickelten Materials eingerichtet ist;
eine Förderwalze (3), die zur Erzeugung einer Vorschubbewegung des von der ersten Walze (1) abgewickelten Materials ausgelegt ist;
einen Ätzkopf, der zum Erzeugen eines Ätzmusters in dem von der ersten Walze abgewickelten Material eingerichtet ist;
eine erste, stromabwärts des Laserätzkopfes angeordnete Infrarotstrahlungsquelle, die zum Bestrahlen des von der ersten Walze abgewickelten Materials mit Infrarotstrahlung ausgelegt ist;
einen ersten, stromabwärts der ersten Infrarotstrahlungsquelle angeordneten Schneidkopf (4), der zum Ausführen eines Kiss-Cuts in das von der ersten Walze (1) abgewickelte Material ausgelegt ist;
eine erste, stromabwärts des ersten Schneidkopfes (4) angeordnete Abzugswalze (5), die zum Abziehen eines Ausschussabschnitts des von der ersten Walze (1) abgewickelten Materials ausgelegt ist;
einen ersten, stromabwärts der ersten Abzugswalze angeordneten Dispenser (6) für leitfähige Paste, der zum Auftragen von Elementen aus leitfähiger Paste auf das von der ersten Walze (1) abgewickelte Material ausgelegt ist;
einen ersten, stromabwärts des ersten Dispensers für leitfähige Paste angeordneten Bearbeitungsarm, der zum Anbringen einer ersten Stromschiene auf dem von der ersten Walze (1) abgewickelten Material ausgelegt ist;
einen ersten, stromabwärts des ersten Bearbeitungsarms angeordneten Polymerdispenser, der zum Auftragen einer polymeren Substanz auf das von der ersten Walze (1) abgewickelte Material ausgelegt ist;
eine stromabwärts des ersten Polymerdispensers angeordnete Umlenkeinheit, die dazu ausgelegt ist, das von der ersten Walze (1) abgewickelte Material umzudrehen;
eine zweite, stromabwärts der Umlenkeinheit angeordnete Infrarotstrahlungsquelle, die zum Bestrahlen des von der ersten Walze abgewickelten Materials mit Infrarotstrahlung ausgelegt ist;
ein zweiter, stromabwärts der zweiten Infrarotstrahlungsquelle angeordneter Schneidkopf (4), der zum Ausführen eines Kiss-Cuts in das von der ersten Walze (1) abgewickelte Material ausgelegt ist;
eine zweite, stromabwärts des zweiten Schneidkopfes (4) angeordnete Abzugswalze (5), die zum Abziehen eines Ausschussabschnitts des von der ersten Walze (1) abgewickelten Materials ausgelegt ist;
einen zweiten, stromabwärts der zweiten Abzugswalze angeordneten Dispenser (6) für leitfähige Paste, der zum Auftragen einer Vielzahl von Elementen aus leitfähiger Paste auf das von der ersten Walze (1) abgewickelte Material ausgelegt ist;
einen zweiten, stromabwärts des zweiten Dispensers für leitfähige Paste angeordneten Bearbeitungsarm, der zum Anbringen einer Vielzahl von zweiten Stromschienen auf dem von der ersten Walze (1) abgewickelten Material ausgelegt ist;
eine stromabwärts des zweiten Bearbeitungsarms angeordnete Thermoformvorrichtung; und
eine stromabwärts der Thermoformvorrichtung angeordnete Vorrichtung zum Aufbringen einer flexiblen Leiterplatte.

8. Vorrichtung nach Anspruch 7, wobei die Umlenkeinheit eine erste Umlenkrolle zum Ändern der Richtung des von der ersten Walze (1) abgewickelten Materials um 90° im Uhrzeigersinn und eine zweite Umlenkrolle zum Ändern der Richtung des von der ersten Walze (1) abgewickelten Materials um 90° im Uhrzeigersinn umfasst, sodass das von der ersten Walze (1) abgewickelte Material in einer ersten Richtung in die Umlenkeinheit eintritt und die Umlenkeinheit in einer der ersten Richtung entgegengesetzten zweiten Richtung verlässt.

9. Vorrichtung nach einem der Ansprüche 7 oder 8, wobei der erste Schneidkopf und/oder der zweite Schneidkopf einen Plotterklingenschneidkopf oder einen Laserschneidkopf umfasst.

10. Verfahren oder Vorrichtung nach einem der vorstehenden Ansprüche, wobei der Ätzkopf ein Laserätzkopf ist.

## Revendications

1. Procédé de fabrication d'un élément, le procédé comprenant le déroulement d'un agencement de film intelligent (10) depuis un premier rouleau sur une surface de travail (2), l'agencement de film intelligent (10) comprenant une première couche conductrice, une deuxième couche conductrice et une couche d'un matériau à cristaux liquides dispersés dans un polymère réticulé entre la première et la deuxième couche conductrice, de sorte qu'une partie de travail de l'agencement de film intelligent (10) subit les étapes suivantes dans cet ordre :
a. la réalisation d'une pluralité de lignes de gravure (23) dans la première couche conductrice au moyen d'au moins une tête de gravure (4) ;
b. l'application d'une première source de rayonnement infrarouge (5) sur une première zone de la partie de travail, de sorte que le matériau PDLC de la première zone est dégradé, la première zone (21) étant délimitée par un premier périmètre (22) ;
c. une première tête de découpe (6) réalise une découpe partielle dans le premier périmètre de la première zone et un premier rouleau (7) retire la première couche conductrice et le matériau PDLC de la première zone ;
d. un premier élément de pâte conductrice (24) est déposé sur la première zone (21) et séché ;
e. une première barre collectrice (25) est installée sur une partie du premier élément de pâte conductrice (24), une première partie (251) de la première barre collectrice (25) étant installée sur une première partie de la deuxième couche conductrice et une deuxième partie (252) de la première barre collectrice (25) étant installée sur une deuxième partie de la deuxième couche conductrice ;
f. une pâte d'étanchéité (26) est appliquée sur la première zone de la partie de travail, recouvrant également une marge excédentaire autour de la première zone, puis est séchée par application d'une énergie UV ;
g. un ensemble de direction modifie l'orientation de l'agencement de film intelligent en le retournant ;
h. l'application d'une deuxième source de rayonnement infrarouge sur une deuxième zone de la partie de travail, de sorte que le matériau PDLC de la deuxième zone est dégradé, la deuxième zone étant délimitée par un deuxième périmètre et la deuxième zone comprenant la deuxième partie de la deuxième couche conductrice ;
i. une deuxième tête de découpe (15) réalise une découpe partielle dans le périmètre de la deuxième zone et un deuxième rouleau retire la deuxième couche conductrice et le matériau PDLC de la deuxième zone, retirant ainsi au moins la deuxième partie de la deuxième couche conductrice, en laissant visible la deuxième partie de la première barre collectrice depuis la face de la deuxième couche conductrice ;
j. une pluralité de deuxièmes éléments de pâte conductrice sont déposés sur la deuxième zone et séchés ;
k. une deuxième barre collectrice est installée sur chaque deuxième élément de pâte conductrice ;
l. la partie de travail est découpée et thermoformée ;
m. un circuit imprimé flexible est appliqué sur la deuxième zone, en contact avec la deuxième partie de la première barre collectrice et en contact avec la pluralité de deuxièmes barres collectrices ; et
n. une pâte d'étanchéité est appliquée sur la deuxième zone de la partie de travail, recouvrant également une marge excédentaire autour de la deuxième zone, puis est séchée par application d'une énergie UV.

2. Procédé selon la revendication 1, dans lequel, entre les étapes a. et b., le procédé comprend l'étape de marquage de l'agencement de film intelligent.

3. Procédé selon la revendication 2, dans lequel l'étape de marquage de l'agencement de film intelligent est réalisée par application d'une machine IR et découpe d'une partie de l'agencement de film intelligent.

4. Procédé selon l'une quelconque des revendications précédentes, dans lequel les éléments de pâte conductrice comprennent une pâte d'argent.

5. Procédé selon l'une quelconque des revendications précédentes, dans lequel les étapes a. à f. sont réalisées à un premier étage et les étapes h. à n. sont réalisées à un deuxième étage différent du premier étage, de sorte que l'étape g. est réalisée en modifiant la direction d'avance de l'agencement de film intelligent au moyen de l'ensemble de direction.

6. Procédé selon l'une quelconque des revendications précédentes, dans lequel la première zone recouvre trois côtés de la partie de travail et la deuxième zone recouvre le côté de la partie de travail qui n'est pas recouvert par la première zone.

7. Appareil apte à mettre en œuvre les étapes d'un procédé selon l'une quelconque des revendications précédentes, l'appareil comprenant :
un premier rouleau (1) ;
une surface de travail (2) agencée pour recevoir le matériau déroulé par le premier rouleau (1) ;
un rouleau convoyeur (3) apte à provoquer un mouvement d'avance dans le matériau déroulé par le premier rouleau (1) ;
une tête de gravure agencée pour réaliser un motif de gravure dans le matériau déroulé par le premier rouleau ;
une première source de rayonnement infrarouge agencée en aval de la tête de gravure laser et configurée pour appliquer un rayonnement infrarouge sur le matériau déroulé par le premier rouleau ;
une première tête de découpe (4) agencée en aval de la première source de rayonnement infrarouge et configurée pour réaliser une découpe partielle dans le matériau déroulé par le premier rouleau (1) ;
un premier rouleau de retrait (5) agencé en aval de la première tête de découpe (4) et configuré pour retirer une partie de rebut du matériau déroulé par le premier rouleau (1) ;
un premier distributeur de pâte conductrice (6) agencé en aval du premier rouleau de retrait et configuré pour déposer des éléments de pâte conductrice sur le matériau déroulé par le premier rouleau (1) ;
un premier bras de travail agencé en aval du premier distributeur de pâte conductrice et configuré pour placer une première barre collectrice sur le matériau déroulé par le premier rouleau (1) ;
un premier distributeur de polymère agencé en aval du bras de travail et configuré pour déposer une substance polymérique sur le matériau déroulé par le premier rouleau (1) ;
un ensemble de direction agencé en aval du premier distributeur de polymère et configuré pour retourner l'orientation du matériau déroulé par le premier rouleau (1) ;
une deuxième source de rayonnement infrarouge agencée en aval de l'ensemble de direction et configurée pour appliquer un rayonnement infrarouge sur le matériau déroulé par le premier rouleau ;
une deuxième tête de découpe (4) agencée en aval de la deuxième source de rayonnement infrarouge et configurée pour réaliser une découpe partielle dans le matériau déroulé par le premier rouleau (1) ;
un deuxième rouleau de retrait (5) agencé en aval de la deuxième tête de découpe (4) et configuré pour retirer une partie de rebut du matériau déroulé par le premier rouleau (1) ;
un deuxième distributeur de pâte conductrice (6) agencé en aval du deuxième rouleau de retrait et configuré pour déposer une pluralité d'éléments de pâte conductrice sur le matériau déroulé par le premier rouleau (1) ;
un deuxième bras de travail agencé en aval du deuxième distributeur de pâte conductrice et configuré pour placer une pluralité de deuxièmes barres collectrices sur le matériau déroulé par le premier rouleau (1) ;
un dispositif de thermoformage agencé en aval du deuxième bras de travail ; et
un dispositif d'application d'un circuit imprimé flexible agencé en aval du dispositif de thermoformage.

8. Appareil selon la revendication 7, dans lequel l'ensemble de direction comprend un premier rouleau de direction configuré pour modifier de 90° dans le sens horaire la direction du matériau déroulé par le premier rouleau (1) et un deuxième rouleau de direction configuré pour modifier de 90° dans le sens horaire la direction du matériau déroulé par le premier rouleau (1), de sorte que le matériau déroulé par le premier rouleau entre dans l'ensemble de direction selon une première direction et sort de l'ensemble de direction selon une deuxième direction opposée à la première direction.

9. Appareil selon l'une quelconque des revendications 7 ou 8, dans lequel la première tête de découpe et/ou la deuxième tête de découpe comprend une tête de découpe à lame de traceur ou une tête de découpe laser.

10. Procédé ou appareil, selon l'une quelconque des revendications précédentes, dans lequel la tête de gravure est une tête de gravure laser.
